# EUROPÄISCHE PATENTSCHRIFT

(11) **EP 3 805 023 B1**
(45) Veröffentlichungstag und Bekanntmachung des Hinweises auf die Patenterteilung: **07.12.2022**
(21) Anmeldenummer: 20200040.2
(22) Anmeldetag: 05.10.2020
(51) Int. Cl.: B60G 3/14, B60G 7/02, B60G 11/22

(54) **FEDERACHSE**
SPRING AXLE
AXE DE RESSORT

(30) Priorität: 08.10.2019 DE 202019105547 U
(43) Veröffentlichungstag der Anmeldung: 14.04.2021
(73) Patentinhaber: Alois Kober GmbH, 89359 Kötz (DE)
(72) Erfinder: Mendle, Dominik, 89312 Günzburg (DE); Rampp, Armin, 86513 Ursberg (DE)
(74) Vertreter: ERNICKE Patent- und Rechtsanwälte PartmbB

(56) Entgegenhaltungen:
- WO-A1-94/11210
- DE-A1- 3 819 162
- DE-U1-202017 101 992
- DE-U1-202018 100 095
- FR-A1- 2 373 409

## Beschreibung

Die Erfindung betrifft eine Federachse für Straßenfahrzeuge mit den Merkmalen im Oberbegriff des Hauptanspruchs.

Federachsen für Straßenfahrzeuge sind aus der Praxis bekannt. Sie sind z.B. als Gummifederachse oder Drehstabfederachse ausgebildet und weisen ein Achsrohr, einen endseitig befestigten Achsbock und eine im Achsrohr integrierte Federung, z.B. Gummifederung, auf. Am Achsrohr ist ein mit der Federung verbundener Radschwinghebel drehbar angeordnet. Er kann z.B. eine Radschwingwelle aufweisen, die in das Achsrohr eingesteckt und mit der Federung verbunden ist.

Die DE 20 2017 101 992 U1 zeigt eine luftgefederte Torsionsfederachse mit einem Radschwinghebel, dessen zylindrisches Innenrohr über zwei distanzierte Lager im und am Achsrohr gelagert ist. Das eine Lager ist zwischen einer rohrartigen Muffe am Achsrohrende und dem Innenrohr angeordnet. Das andere Lager ist als Gleitlager zwischen dem Endbereich des Innenrohrs und dem Achsrohr ausgebildet.

In DE 20 2018 100095 U1 wird eine Gummifederachse als Variante erwähnt.

Es ist Aufgabe der vorliegenden Erfindung, eine verbesserte Federachstechnik aufzuzeigen.

Die Erfindung löst diese Aufgabe mit den Merkmalen im Hauptanspruch.

Die beanspruchte Federachstechnik, d.h. die Federachse, das Montageverfahren, das Fahrzeugchassis und das Straßenfahrzeug, haben verschiedene Vorteile.

Durch die links und rechts am Fahrzeug bevorzugt unabhängig voneinander drehbaren Radschwinghebel ergibt sich eine Einzelradaufhängung der Fahrzeugräder. Das am Radschwinghebel aufgezogene und am Achsbock befestigte Drehlager verbessert die Radführung des Straßenfahrzeugs. Die Vorgabewerte für die Spur und den Sturzwinkel der Fahrzeugräder können besser eingehalten werden. Der Geradeauslauf des Straßenfahrzeugs und die Fahrsicherheit werden erhöht. Die beanspruchte Federachse eignet sich für Kraftfahrzeuganhänger und auch für leichte Nutzfahrzeuge, insbesondere für ein Anbauchassis solcher Nutzfahrzeuge.

Das Drehlager ist an der vom Achsrohr axial wegweisenden Außenseite des Achsbocks angeordnet und dort in geeigneter Weise befestigt, z.B. durch Schweißen, Schrauben oder dgl.. Die Befestigung erfolgt mittels eines hierfür vorgesehenen Drehlagerteils. Dieses Drehlagerteil kann an der besagten Außenseite oder Stirnseite des Achsbocks anliegen, insbesondere stumpf anstoßen. Die Befestigung durch Schweißen oder dgl. kann an dieser Anliege- oder Stoßstelle erfolgen. Für die Gestaltung und Befestigung des Drehlagers gibt es verschiedene Möglichkeiten.

Der Achsbock kann eine quer zum Achsrohr ausgerichtete Anbauplatte aufweisen, die zur außenseitigen Montage an einem aufrechten Mittelsteg eines Längsträgers eines Fahrzeugchassis ausgebildet ist. Die besagten Befestigungen am Achsbock sowie die Bezüge auf Außenseite und Innenseite können an dieser Anbauplatte angeordnet sei. Die Befestigungen können sich im Bereich einer Durchgangsöffnung des Achsbocks, insbesondere seiner Anbauplatte, befinden.

Das Achsrohr ist an einem oder beiden Endbereichen eigenständig mit einem Achsbock, insbesondere dessen Anbauplatte, fest verbunden, z.B. durch Schweißen. Das Achsrohr stößt dabei z.B. stumpf innenseitig am Achsbock, insbesondere an der Anbauplatte, an oder ist in eine dortige Durchgangsöffnung eingesteckt. Die Befestigung des Achsrohrs befindet sich vorzugsweise an der Innenseite des Achsbocks, z.B. in Form einer Kehlschweißnaht. Die Befestigung von Achsrohr und Achsbock erfolgt vor der Montage des Radschwinghebels und der Befestigung des Drehlagers am Achsbock.

Die Befestigung des Drehlagers am Achsbock kann eigenständig und unabhängig von der Achsrohrbefestigung am Achsbock erfolgen. Die Befestigungsstellen von Achsrohr und Drehlager können getrennt voneinander am Achsbock, insbesondere an der Anbauplatte, angeordnet sein. Sie können sich an unterschiedlichen Seiten des Achsbocks, insbesondere der Anbauplatte befinden. Die Befestigungen von Achsrohr und Drehlager können sich im Bereich einer Durchgangsöffnung des Achsbocks, insbesondere seiner Anbauplatte, befinden.

Das Drehlager weist zumindest ein Ringlager auf. Das Drehlager kann auch ein integriertes elastisches Ausgleichselement aufweisen. Das elastische Ausgleichselement kann z.B. zwischen dem Ringlager und einem Lagerbock angeordnet sein. Die außenseitige Befestigung des Drehlagers am Achsbock, insbesondere an der Anbauplatte, kann über ein Teil des Ringlagers, z.B. den Außenring, oder über den Lagerbock erfolgen. Der Lagerbock wird z.B. durch Schraubverbindungen am Achsbock befestigt. Ein elastisches Ausgleichselement kann auch in anderer Weise in das Drehlager integriert sein und sich z.B. an anderer Stelle des Drehlagers befinden.

Ein im Drehlager integriertes, insbesondere am Ringlager aufgezogenes, elastisches Ausgleichselement kann Lageabweichungen, Verzüge oder dgl. bei der Montage des Radschwinghebels am Achsrohr und am Achsbock kompensieren und Beschädigungen vermeiden. Beim Schweißen können sich Verzüge und Winkelabweichungen ergeben. Diese können ggf. durch das elastische Ausgleichselement kompensiert werden. Alternativ können evtl. Lageabweichungen, Verzüge oder dgl. auf andere Weise kompensiert werden, z.B. durch innenseitiges lage- und maßgerechtes Bearbeiten, z.B. Ausbohren, eines zuvor am Achsbock befestigten Drehlagerteils, z.B. eines Außenrings des Ringlagers.

Der Radschwinghebel kann derart am Achsrohr montiert werden, dass der Radschwinghebel mit dem zuvor aufgezogenen Drehlager in das Achsrohr eingesteckt und anschließend das Drehlager am Achsbock befestigt wird. Die Befestigung kann über den Lagerbock erfolgen, vorzugsweise mittels Schrauben. Es ist auch eine andere Vorgehensweise möglich, bei der ein Teil des Drehlagers, z.B. ein Außenring des Ringlagers, zuerst am Achsbock bzw. der Anbauplatte befestigt und ggf. innenseitig bearbeitet wird, wobei anschließend der Radschwinghebel in das Achsrohr eingesteckt und die anderen Drehlagerteile zusammengefügt werden. Es ist ferner möglich, dass sich ein elastisches Ausgleichselement an anderer Stelle des Drehlagers, z.B. an einem Innenring des Ringlagers, befindet. Das elastische Ausgleichselement kann mit anderen Drehlagerteilen an einem zuvor am Achsbock bzw. der Anbauplatte befestigten Außenring des Drehlagers zusammengefügt werden. In diesen Fällen ist jeweils das Achsrohr zuvor mit dem Achsbock fest verbunden worden.

Das elastische Ausgleichselement ist z.B. zwischen dem Ringlager und dem Lagerbock, insbesondere einem Außenring des Lagerbocks, angeordnet. Es kann durch seine Elastizität einachsige oder mehrachsige Lageabweichungen zwischen dem z.B. fest auf der Radschwingwelle montierten Ringlager und dem am Achsbock befestigten Lagerbock aufnehmen. Diese Befestigung am Achsbock kann vorteilhafterweise nach dem Einstecken des Radschwinghebels in das Achsrohr erfolgen, wobei das Einstecken beschädigungsfrei und zwängungsfrei erfolgen kann. Bei der Befestigung am Achsbock kann sich der Lagerbock dank der Nachgiebigkeit des Ausgleichselements bedarfsweise relativ zum eingesteckten Radschwinghebel bewegen, um etwaige Lageabweichungen zwischen den Befestigungsstellen am Lagerbock und am Achsbock auszugleichen. Der Lagerbock kann sich dabei z.B. um die Lagerachse oder Drehachse verdrehen und/oder auch um eine Querachse kippen und/oder verschieben.

Bei einem an anderer Stelle des Drehlagers angeordneten elastischen Ausgleichselement können die Lageabweichungen beim Zusammenfügen der Drehlagerteile kompensiert werden. Die Bearbeitung eines zuvor bereits am Achsbock bzw. an der Anbauplatte befestigten Drehlagerteils, z.B. Außenrings, kann dabei ggf. entfallen.

Der Achsbock weist bevorzugt die besagte quer zum Achsrohr ausgerichtete Anbauplatte auf. Diese kann einlagig bzw. als Einzelplatte ausgebildet sein und kann ggf. auch umgebogene Ränder zur Versteifung aufweisen. Der Achsbock, insbesondere seine Anbauplatte, ist zur außenseitigen Montage an einem aufrechten Mittelsteg des Längsträgers eines Fahrzeugchassis ausgebildet. Der Achsbock kann dabei ggf. eine Ausnehmung am unteren Längsträgerrand überbrücken, in welche das Achsrohr eintauchen kann. Eine solche Achsbefestigung am Mittelsteg ist besonders stabil und exakt.

Der Achsbock kann ein Stützmittel für das Drehlager aufweisen. Dieses kann z.B. als bevorzugt aufrechte und nach außen ausbauchende Stützkonsole ausgebildet sein, die an der Außenseite des Achsbocks bzw. der Anbauplatte und bevorzugt mit Berührungskontakt über dem Drehlager angeordnet ist. Das Drehlager, insbesondere das Ringlager, kann mit dem Stützmittel fest verbunden sein, z.B. durch eine Schweißverbindung.

Die Befestigung des Drehlagers an einem solchen Achsbock ist für die Aufnahme der Lagerkräfte und für die Stabilisierung der Schwinghebelkinematik ebenfalls von großem Vorteil.

Das Ringlager kann am rückwärtigen Ende der Schwingwelle fest montiert sein. Es kann dabei an die Außenkontur der Schwingwelle, z.B. an Einschnürungen im Wellenmantel, formschlüssig angepasst sein. Dies ist besonders günstig bei der Gummifederung. Das Ringlager kann generell innenseitig prismatisch konturiert sein.

Das Ringlager kann sich an einem rückwärtigen Bund abstützen, der an der Übergangsstelle der Schwingwelle in den Schwingarm ausgebildet ist. Das Ringlager kann am Radschwinghebel, insbesondere an der Schwingwelle, in geeigneter Weise geführt und ggf. befestigt sein, z.B. mit Kraftschluss und/oder Formschluss und/oder Stoffschluss. Hier kann ggf. ein elastisches Ausgleichselement angeordnet sein.

Das Ringlager befindet sich in Montagestellung außerhalb des Achsrohrs und des Achsbocks. Das Ringlager kann von einer mit dem Schwinghebel fest, insbesondere formschlüssig, verbundenen Lagerbuchse, einem darauf angeordneten Lagerelement, insbesondere einem Gleitlagerring, und einem wiederum darauf angeordneten Außenring gebildet werden. Der Außenring kann z.B. über das elastische Ausgleichselement, insbesondere in Form eines Elastomerrings, mit einem Aufnahmering am Lagerbock verbunden werden. Dies kann eine feste Verbindung sein, die z.B. durch Kleben geschaffen wird.

Die Federung ist als integrierte Gummifederung ausgebildet. Die Federelemente befinden sich im Achsrohr und sind in geeigneter Weise mit dem Radschwinghebel, insbesondere dessen Schwingwelle, verbunden. Gummischnüre einer Gummifederung können z.B. in die besagten Einschnürungen am Schwingwellenmantel eingelegt sein. Die Federung kann weitere Federkomponenten aufweisen.

Die Federachse kann unterschiedlich ausgebildet sein, z.B. als Halbachse oder als über die Fahrzeugbreite durchgehende Achse. Bei einer Halbachse oder Stummelachse weist das Achsrohr nur an einem Endbereich einen Achsbock und einen Radschwinghebel auf. Bei einer durchgehenden Achse sind an beiden Enden Achsböcke und Radschwinghebel nebst Drehlagern angeordnet. Die Federachse kann ferner als Längslenkerachse oder als Schräglenkerachse ausgebildet sein.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Federachse mit einem Achsrohr, endseitigen Achsböcken und Radschwinghebeln sowie Drehlagern,
- Figur 2:: eine abgebrochene perspektivische Ansicht einer Federachse vor der Montage des Radschwinghebels am Achsrohr,
- Figur 3:: eine perspektivische Ansicht eines Radschwinghebels mit einem Drehlager,
- Figur 4:: eine Explosionsdarstellung des Drehlagers am Radschwinghebel,
- Figur 5:: eine geschnittene Ansicht eines Achsrohrs mit einer Federung und einem Radschwinghebel,
- Figur 6:: eine außenseitige Stirnansicht der Federachse,
- Figur 7:: einen Längsschnitt durch die Federachse gem. Schnittlinie VII-VII von Figur 6,
- Figur 8:: eine vergrößerte und geschnittene Ansicht des Details VIII von Figur 7,
- Figur 9:: ein Straßenfahrzeug mit einer Federachse in perspektivischer Ansicht,
- Figur 10:: eine Variante der Federachse und ihrer Drehlager in perspektivischer Ansicht,
- Figur 11 bis 13:: verschiedene Ansichten und Schnitte der Federachse von Figur 10 und
- Figur 14:: eine geschnittene und abgebrochene Detaildarstellung XIV eines Drehlagers gemäß Figur 13.

Die Erfindung betrifft eine Federachse (1) für ein Straßenfahrzeug (33). Die Erfindung betrifft auch ein mit mindestens einer Federachse (1) ausgerüstetes Fahrzeugchassis (34). Die Erfindung bezieht sich ferner auf ein Straßenfahrzeug (33), das mit einem Fahrzeugchassis (34) und mit mindestens einer Federachse (1) ausgestattet ist. Außerdem betrifft die Erfindung ein Montageverfahren für eine Federachse (1) an einem Straßenfahrzeug (33).

Das Straßenfahrzeug (33) ist für den Straßenverkehr vorgesehen und ausgebildet. Es kann in unterschiedlicher Weise ausgebildet sein, z.B. als Fahrzeuganhänger oder als Kraftfahrzeug, insbesondere als leichtes Nutzfahrzeug. Das Kraftfahrzeug kann z.B. einen Frontantrieb aufweisen. Es kann z.B. mit einem frontgetriebenen Zugkopf (35) und einem Anbauchassis (36) ausgerüstet sein. Der Zugkopf (35) kann einen Antriebsmotor, eine Lenkung, Sitze, ggf. ein Getriebe und eine Kabine aufweisen.

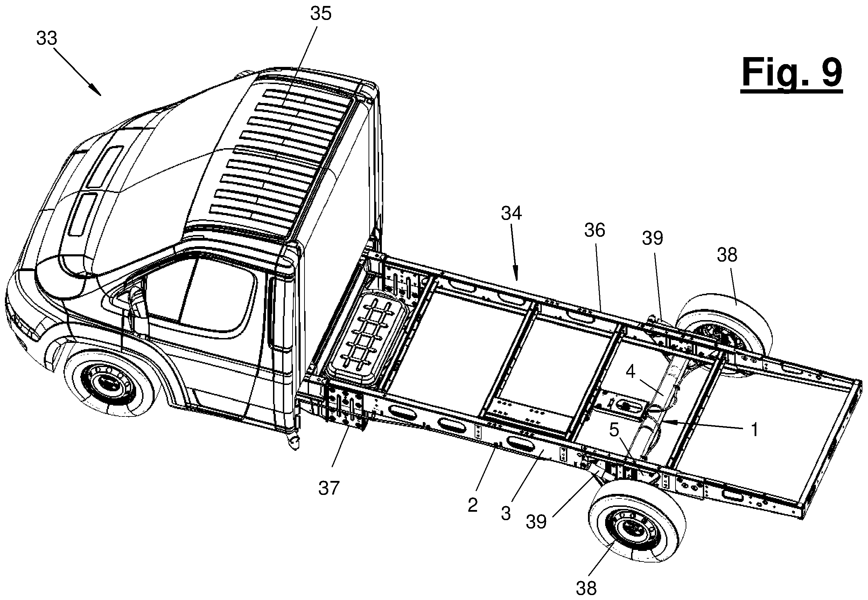

Das Straßenfahrzeug (33) weist ein Fahrzeugchassis (34) auf, das z.B. zwei parallele Längsträger (2) umfasst, an denen eine oder mehrere Federachsen (1) aufgenommen ist oder sind. Das Fahrzeugchassis (34) kann auch Querträger aufweisen und kann z.B. als Leiterrahmen ausgebildet sein. Das Fahrzeugchassis (34) kann als Anbauchassis (36) ausgebildet sein. Das Anbauchassis (36) kann mittels eines bevorzugt verschraubten Adapters (37) mit Längsträgern eines Zugkopfchassis unter Bildung eines Höhenversatzes verbunden werden. Ein Straßenfahrzeug (33) und ein Fahrzeugchassis (34) sind Figur 9 beispielhaft dargestellt.

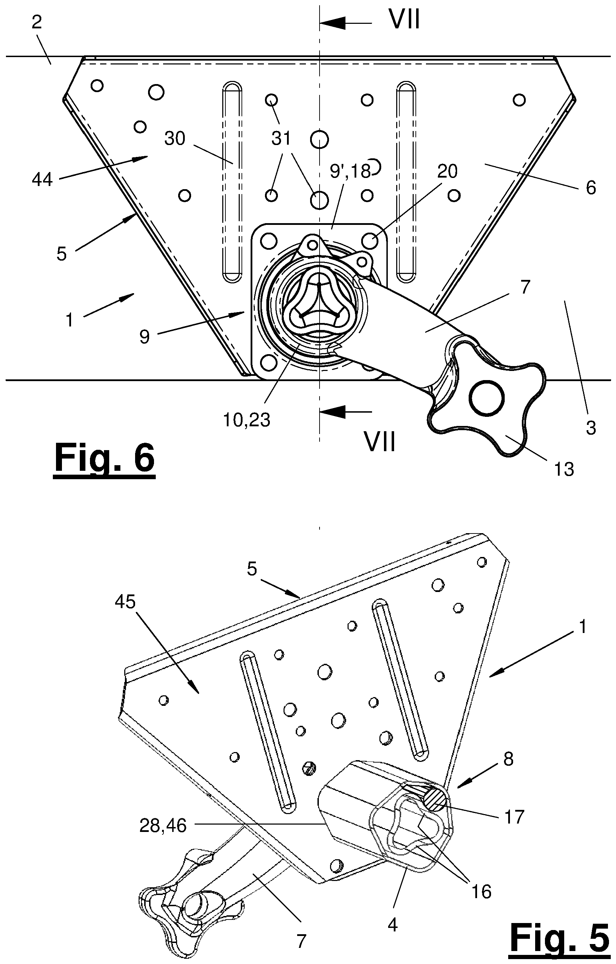

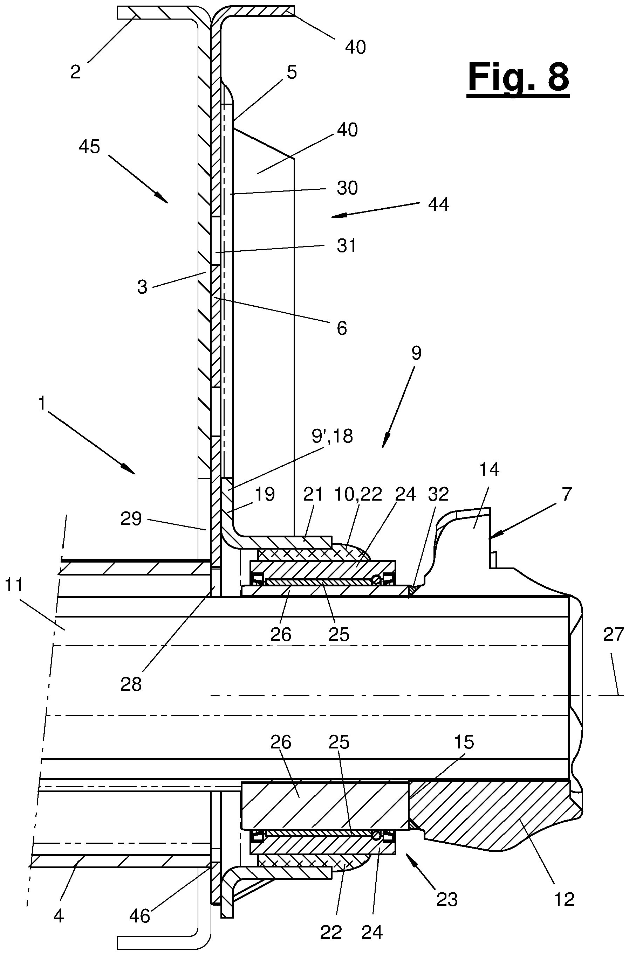

In Figur 6, 8 und 9 ist ein Längsträger (2) dargestellt. Der Längsträger (2) weist einen in Einbaustellung aufrechten, insbesondere vertikalen, Mittelsteg (3) auf. An dessen oberem und/oder unterem Rand kann ein Quergurt angeordnet sein, was z.B. in Figur 8 und 9 dargestellt ist. Der z.B. aus Metall, insbesondere Stahl, bestehende Längsträger (2) kann als dünnwandiges Profil ausgebildet sein. Er kann im Querschnitt z.B. eine C-, L- oder Z-Form aufweisen.

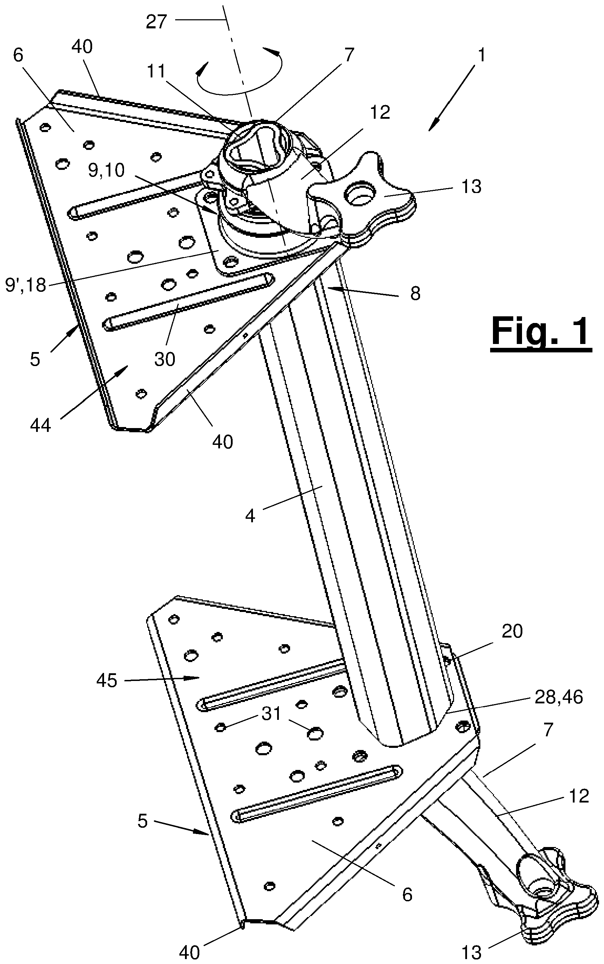

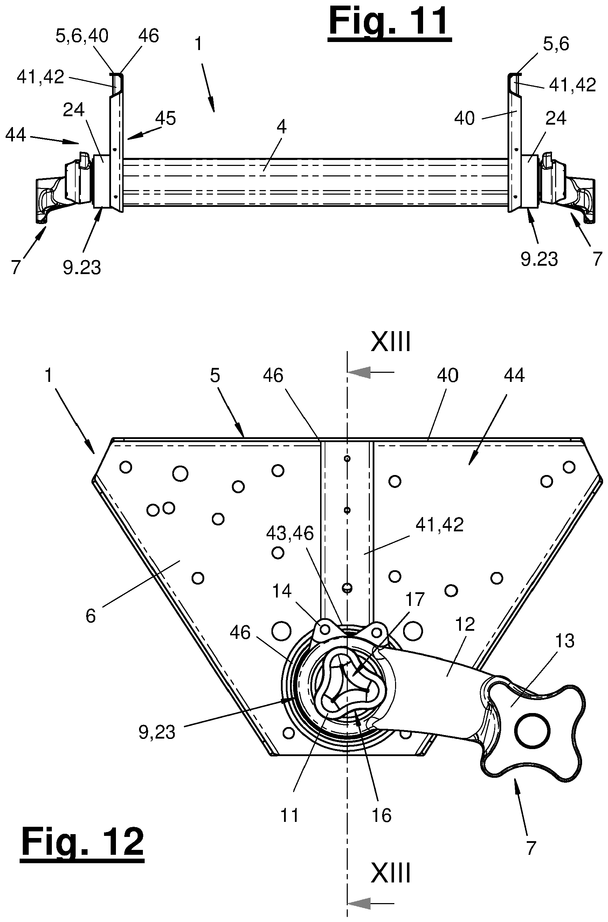

Figur 1 bis 8 und Figur 10 bis 14 zeigen zwei Varianten der Federachse (1) in verschiedenen Ansichten.

Figur 1 und 9 zeigen eine erste Variante der Federachse (1) in einer perspektivischen Ansicht. Die Federachse (1) weist ein hohles Achsrohr (4) und an den beiden Endbereichen jeweils einen Achsbock (5) auf. Ferner sind an beiden Enden des Achsrohrs (4) Radschwinghebel (7) angeordnet. Diese können um eine Drehachse (27) schwenken. Die Federachse (1) weist eine in Figur 1 nicht sichtbare Federung (8) auf, die als Gummifederung ausgebildet ist.

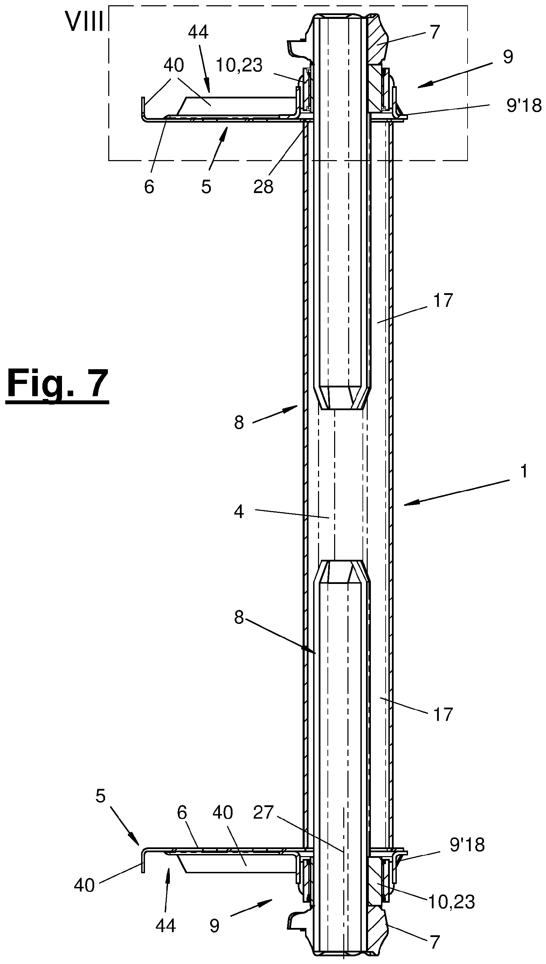

Die Federachse (1) kann an oder unter dem Längsträger (2) in geeigneter Weise angeordnet sein. Das Achsrohr (4) kann z.B. in einer Ausnehmung (29) am unteren Rand des Mittelstegs (3) aufgenommen sein. Figur 7 und 8 zeigen diese Anordnung. In Figur 9 ist eine Anordnung des Achsrohrs (4) unterhalb des Längsträger (2) dargestellt. Die in Figur 1 und 9 gezeigte Achse reicht über die Fahrzeugbreite, wobei beide Achsböcke (5) jeweils an einem Längsträger (2) befestigt sind. In einer anderen und nicht dargestellten Ausführungsform kann die Federachse (1) als Halbachse oder Stummelachse ausgebildet sein, wobei an dem verkürzten Achsrohr (4) nur an einem Ende ein Achsbock (5) und ein Radschwinghebel (7) angeordnet sind.

Das Achsrohr (4) hat in den dargestellten Ausführungsbeispielen eine prismatische Querschnittsform mit z.B. sechs verrundeten Ecken. Diese Ausbildung ist für Gummifederung von Vorteil. Alternativ kann das Achsrohr (4) eine andere, z.B. viereckige, insbesondere quadratische oder sonstige geeignete Querschnittsform aufweisen.

Der Achsbock (5) ist am Ende des Achsrohrs (4) angeordnet und in geeigneter Weise befestigt, z.B. durch Schweißen. Der Achsbock (5) weist in der bevorzugten Ausführungsform eine Anbauplatte (6) auf, die quer, z.B. rechtwinklig, zum Achsrohr (4) ausgerichtet und an diesem stirnseitig befestigt ist. Die Anbauplatte (6) kann einzeln vorhanden sein. Sie kann im wesentlichen eben ausgebildet sein.

Der Achsbock (5) und die Anbauplatte (6) haben jeweils eine vom Achsrohr (4) und auch vom Längsträger (2) axial wegweisende Außenseite (44) und eine zum Achsrohr bzw. zur Achsenmitte axial hinweisende Innenseite (45).

Die Anbauplatte (6) kann mittels Fixiermitteln (31), z.B. Bohrungen und Schrauben, in geeigneter Weise außenseitig am Mittelsteg (3) des Längsträgers (2) befestigt werden. Die Anbauplatte (6) kann am Mittelsteg (3) plan anliegen. Sie kann z.B. gemäß Figur 6 in der Draufsicht eine Trapezform aufweisen und mit ihrer parallelen Oberseite und Unterseite an die Ränder des Mittelstegs (3) anschließen. Die Anbauplatte (6) kann auch gemäß Figur 9 nach unten über den unteren Rand des Mittelstegs (3) hinausragen. Alternativ ist eine andere geeignete Anbauplattenform möglich, z.B. eine Rechteckform. Die Anbauplatte (6) kann oben und an beiden Seiten abgebogene Ränder (40) zur Versteifung aufweisen. Sie kann außerdem zur Versteifung parallele aufrechte Sicken (30) aufweisen.

Die Anbauplatte (6) weist im unteren Bereich eine Durchgangsöffnung (28) auf, die mit dem Achsrohr (4) axial fluchtend angeordnet sein kann. Das Achsrohr (4) kann im Öffnungsbereich mit seiner offenen Stirnseite an die Öffnungsränder an der Innenseite (45) der Anbauplatte (6) anstoßen. Figur 8 zeigt diese Anordnung im Längsschnitt. Das Achsrohr (4) kann alternativ in die Durchgangsöffnung (28) eingesteckt werden. Bei diesen Gestaltungen ragt das Achsrohr (4) mit seiner Stirnseite vorzugsweise nicht über die Außenseite (44) der Anbauplatte (6) axial hinaus. Die Befestigung des Achsrohrs (4) am Achsbock (5), insbesondere an der Anbauplatte (6), erfolgt eigenständig. Die Befestigung (46), insbesondere Schweißnaht, kann sich an der Innenseite (45), ggf. am Rand der Durchgangsöffnung (28), befinden.

Der einzelne Radschwinghebel (7) ist am Achsrohr (4) drehbar angeordnet und ist in das Achsrohr (4) stirnseitig eingesteckt. Der Radschwinghebel (7) ist mit der Federung (8) verbunden. Figur 5 verdeutlicht ausschnittsweise diese Anordnung.

Der Radschwinghebel (7) weist eine abgewinkelte Form mit einer Schwingwelle (11) und einem quer dazu ausgerichteten Schwingarm (12) auf. Am Schwingarm (12) kann am freien Ende ein Radanschluss (13) zur Montage des Fahrzeugrads (38) angeordnet sein. Ferner kann der Schwingarm (12) eine oder mehrere Dämpferanschlüsse (14) für einen Stoßdämpfer (39), eine Absenkfederung oder dgl. aufweisen. Die Schwingwelle (11) wird in das Achsrohr (4) stirnseitig eingesteckt. Sie kann mit der Federung (8) verbunden sein und kann hierfür eine geeignete Form aufweisen. Die Schwingwelle (11) kann mittels der Federung (8) in Axialrichtung im Achsrohr (4) gehalten werden.

In Figur 5 ist die Ausbildung für die Gummifederung dargestellt, die mehrere Federelemente (17) in Form von Gummischnüren aufweist, welche in axiale rinnenartige Einschnürungen (16) am Mantel der Schwingwelle (11) eingelegt sind. Bei einer Drehung des Radschwinghebels (7) werden die Federschnüre (17) zwischen der Schwingwelle (11) und dem umgebenden Achsrohr (4) gequetscht und verformt, wobei eine Federkraft mit bevorzugt progressiver Kennlinie aufgebaut wird. Die Schwingwelle (11) wird durch Reibschluss an den Federelementen (17) in Axialrichtung im Achsrohr (4) gehalten.

Der Radschwinghebel (7) weist ein aufgezogenes Drehlager (9) auf, welches auch am Achsbock (5) befestigbar ist oder befestigt ist. Das Drehlager (9) weist in der ersten Variante einen Lagerbock (18) und ein Ringlager (23) auf. Das Drehlager (9) ist außenseitig am Achsbock (5) und am Achsrohr (4) angeordnet. Das Drehlager (9) kann über den Lagerbock (18) am Achsbock (5) befestigt werden. Das Ringlager (23) ist auf der Schwingwelle (11) des Radschwinghebels (7) aufgesteckt und befestigt.

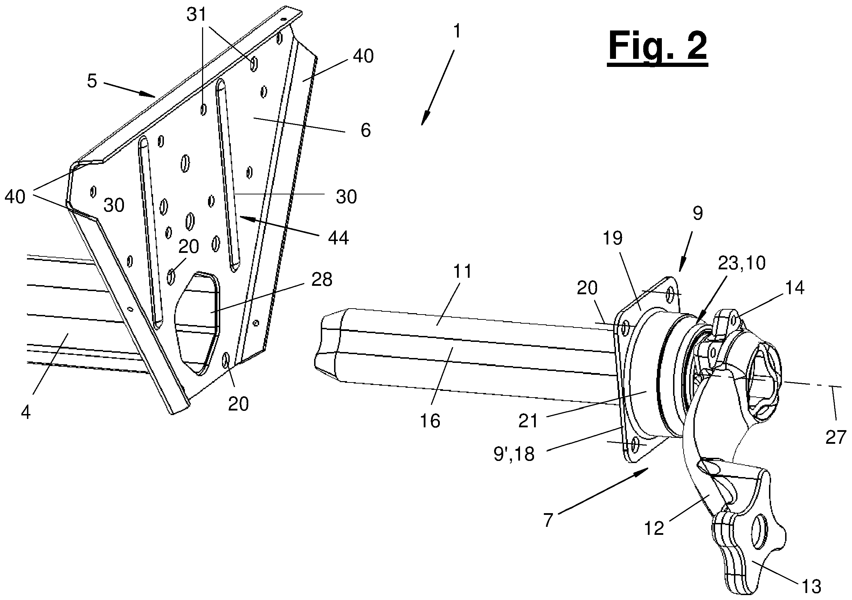

Wie Figur 2 verdeutlicht, kann zuerst das Drehlager (9) auf der Schwingwelle (11) montiert werden, wobei anschließend der Radschwinghebel (7) mit der Schwingwelle (11) in das Achsrohr (4) und die dort ggf. bereits angeordnete Federung (8) eingesteckt wird. Der Lagerbock (18) kann danach am Achsbock (5), insbesondere an dessen Anbauplatte (6) mittels Befestigungselementen (20), z.B. Bohrungen mit Schraubverbindungen, befestigt werden.

Das Drehlager (9) weist ein integriertes elastisches Ausgleichselement (10) auf. Diese kann Lageabweichungen bei eingestecktem Radschwinghebel (7) zwischen dem Achsbock (5) und dem Lagerbock (18) ausgleichen. Das elastische Ausgleichselement (10) ist bevorzugt zwischen dem Lagerbock (18) und dem Ringlager (23) angeordnet.

Bei Verzügen oder anderen Lagefehlern, die bei eingestecktem Radschwinghebel (7) einen Versatz der Befestigungselemente (20) zur Folge haben, kann der Lagerbock (18) unter Verformung des elastischen Ausgleichselements (10) verdreht und/oder verschoben werden, bis die Befestigungselemente (20) zur montagegerechten Deckung kommen.

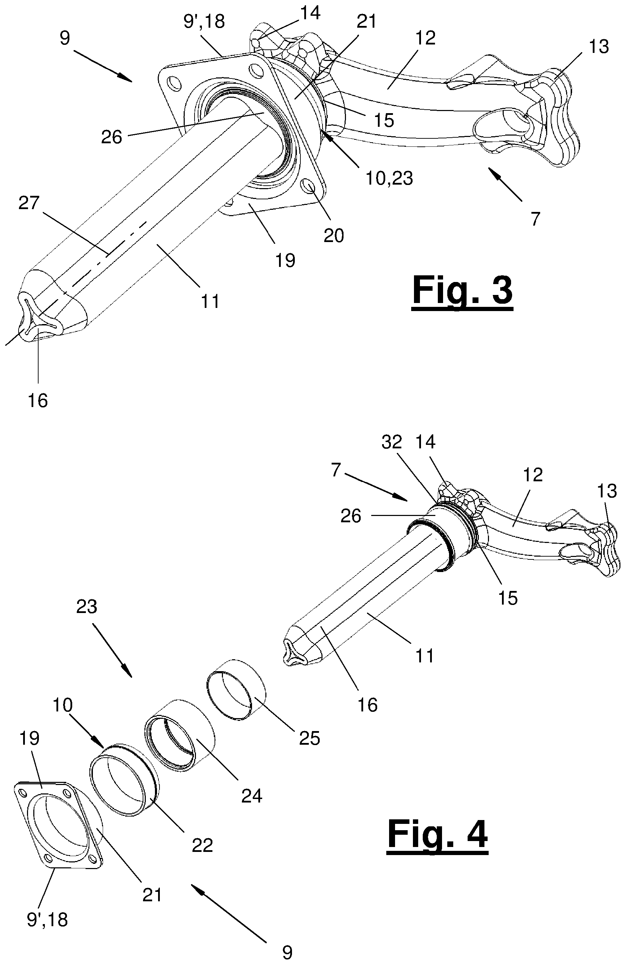

Figur 3 und 4 verdeutlichen die Ausbildung des Radschwinghebels (7) und des Drehlagers (9). In Figur 8 ist das Drehlager (9) in einem Längsschnitt dargestellt.

Das Drehlager (9) ist am hinteren und außerhalb des Achsrohrs (4) gelegenen Ende der Schwingwelle (11) angeordnet. Es liegt dabei mit seinem Ringlager (23) an einem Bund (15) an, der sich an der Übergangsstelle zwischen dem Schwinghebel (11) und dem Schwingarm (12) befindet.

Der Lagerbock (18) weist einen bevorzugt ebenen Lagerflansch (19) und einen Aufnahmering (21) auf. Der Lagerflansch (19) weist mehrere Befestigungsmittel (20), insbesondere Schraubbohrungen, auf. In der Montagestellung kann der Lagerflansch (19) bevorzugt plan und rund um die Durchgangsöffnung (28) an der Außenseite der Anbauplatte (6) anliegen. Für die Befestigung des Lagerbocks (18) werden die z.B. im Viereck verteilten Befestigungsmittel (20) am Lagerbock (18) und am Achsbock (5) gegenseitig zur Deckung gebracht.

Das Ringlager (23) umfasst in der gezeigten Ausführungsform eine Lagerbuchse (26), ein darauf angeordnetes kreisringförmiges Lagerelement (25) und einen darauf angeordneten kreisringförmigen Außenring (24). Das Ringlager (23) ist konzentrisch zur zentralen Drehachse (27) des Radschwinghebels (7), insbesondere der Schwingwelle (11), ausgerichtet.

Die Lagerbuchse (26) ist auf der Schwingwelle (11) endseitig angeordnet und befestigt. Die Lagerbuchse (26) kann an die Außenkontur der Schwingwelle (11), z.B. an die Einschnürungen (16), formschlüssig angepasst sein. Die Lagerbuchse (26) kann alternativ einen zylindrischen Innenumfang haben und an den Wellenstegen zwischen den Einschnürungen (16) anliegen. Eine Befestigung kann durch Kraftschluss, z.B. durch einen Press- oder Schrumpfsitz, erfolgen. Bei einer zylindrischen Schwingwellenkontur im Lagerbereich kann die Lagerbuchse (26) kraftschlüssig, z.B. durch eine Klemmung oder eine Verklebung mit der Schwingwelle (11) fest verbunden sein. Alternativ oder zusätzlich ist eine andere, z.B. stoffschlüssige Befestigung (32) durch Schweißen oder dgl. möglich. Gemäß Figur 8 sind z.B. Schweißnähte am Boden der Einschnürungen (16) oder an anderer geeigneter Stelle angeordnet. Der Außenumfang der Lagerbuchse (26) ist ringförmig bzw. zylindrisch und konzentrisch zur Drehachse (27) ausgerichtet.

Das Lagerelement (25) ist ringartig bzw. zylindrisch ausgebildet. Es kann z.B. gemäß der gezeigten Ausführungsform als Gleitlagerring ausgebildet sein. Alternativ ist eine andere Lagerausbildung, z.B. als Wälzlager, möglich.

Das Lagerelement (25) kann mit dem außenseitig und konzentrisch angeordneten Außenring (24) in geeigneter Weise verbunden sein, z.B. durch eine radiale Anlageschulter und einen Sprengring. Ferner können Dichtungen stirnseitig zur Abdichtung des Lagerelements (25) vorhanden sein. Der Außenring (24) und das Lagerelement (25) können eine kleinere Breite als die Lagerbuchse (26) aufweisen. Das Lagerelement (25) kann in den Außenring (24) eingesteckt und dort fixiert sein, z.B. durch Klemmschluss oder dgl.. Die Lagerbuchse (26) kann sich in dem Lagerelement (25) drehen. Figur 8 verdeutlicht diese Lagerausbildung im Längsschnitt. Die Lagerzuordnung kann auch umgedreht sein.

Das elastische Element (10) ist bevorzugt zwischen dem Ringlager (23) und dem Lagerbock (18) angeordnet. Es ist insbesondere zwischen dem Außenring (24) des Ringlagers (23) und dem Aufnahmering (21) des Lagerbocks (18) angeordnet. Das elastische Ausgleichselement (10) ist bevorzugt ringförmig gestaltet. Es kann gemäß Figur 4 und 8 als Elastomerring (22) gestaltet sein. Das elastomere Material kann z.B. Gummi oder ein anderer geeigneter kompressibler Kunststoff sein.

Das Ausgleichselement (10) bzw. der Elastomerring (22) kann zwischen die radial distanzierten Ringe (21,24) in ihrem Überdeckungsbereich eingepresst sein. Der Aufnahmering (21) kann eine kürzere axiale Länge als der Außenring (24) aufweisen. Außerhalb des Überdeckungsbereichs kann der Elastomerring (22) mit seiner nicht komprimierten Seite an die Stirnseite des Aufnahmerings (21) dicht anschließen. Das Ausgleichselement (10) bzw. der Elastomerring (22) kann durch Klemmschluss, Verklebung, Vulkanisieren oder auf andere Weise am Lagerbock (18) und am Ringlager (23), insbesondere zwischen den Ringen (21,24) befestigt sein.

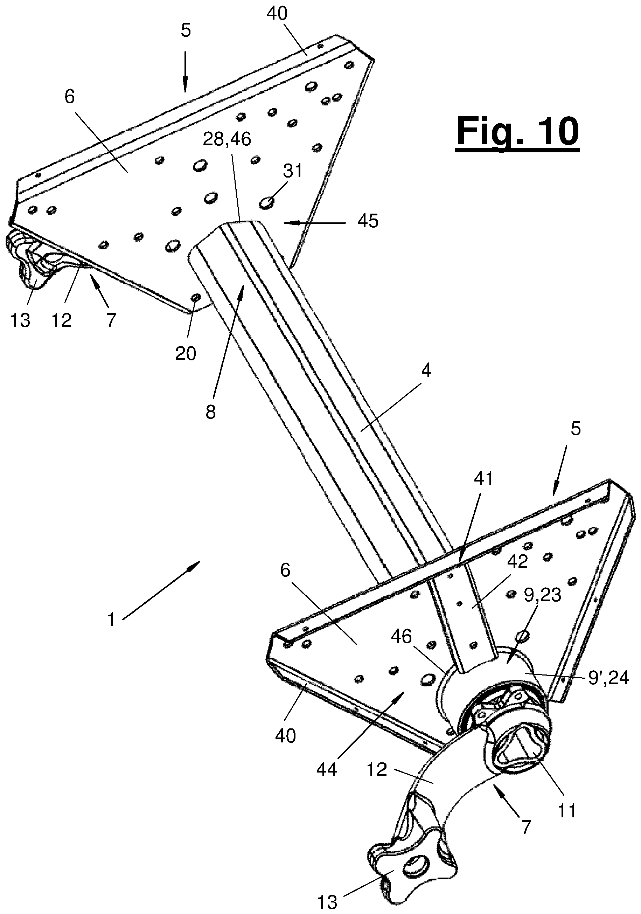

Figur 10 bis 14 zeigen die zweite Variante der Federachse (1). Sie stimmt weitgehend mit dem vorbeschriebenen Ausführungsbeispiel überein und weicht hiervon insbesondere bei der Gestaltung und Befestigung des Drehlagers (9) und durch eine Gestaltung des Achsbocks (5), insbesondere der Anbauplatte (6), ab.

Das Drehlager (9) weist in der gezeigten zweiten Variante ein Ringlager (23) auf, wobei das elastische Ausgleichselement (10) entfällt.

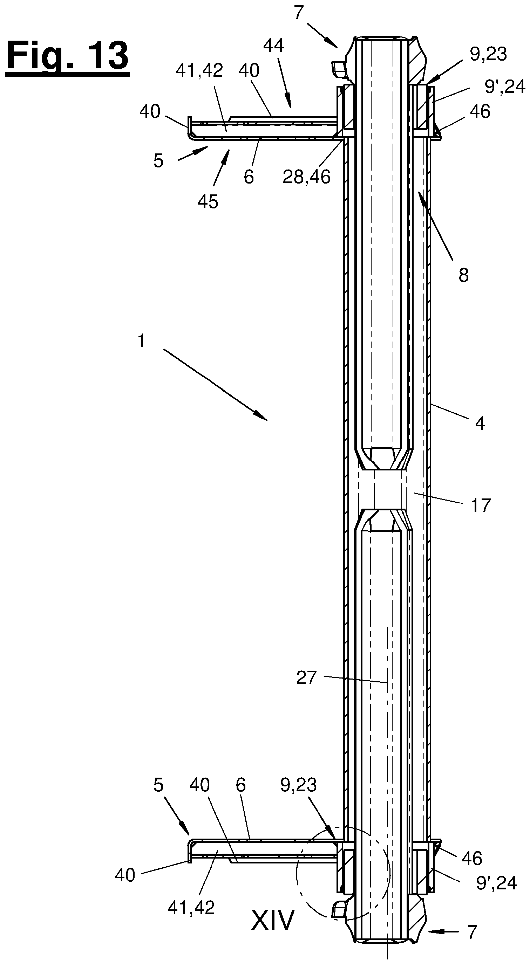

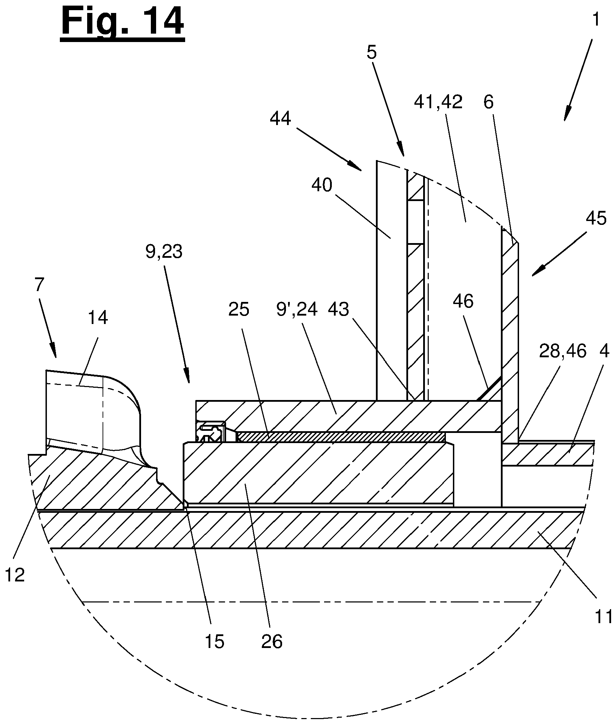

Wie Figur 13 und 14 verdeutlichen, ist auch bei der zweiten Variante das Drehlager (9) an der Außenseite (44) des Achsbocks (5) bzw. der Anbauplatte (6) im Bereich der Durchgangsöffnung (28) angeordnet und ist an dieser Außenseite (44) bzw. der Stirnseite der Anbauplatte (6) befestigt. Die Befestigung (46) ist z.B. als Schweißnaht ausgeführt.

Das Ringlager (23) weist einen kreisringförmigen Außenring (24), ein ebenfalls kreisringförmiges Lagerelement (25), insbesondere einen Gleitlagerring, und die Lagerbuchse (26) auf. Diese ist am Außenumfang zylindrisch ausgebildet und hat z.B. eine profilierte Innenkontur, die an die Außengeometrie der Schwingwelle (11) und ihrer Einschnürungen (16) adaptiert ist.

Die Einschnürungen (16) dienen zur Aufnahme von Federelementen (17), insbesondere Gummischnüren.

Bei der zweiten Variante wird das Drehlager (9) über ein Drehlagerteil (9') am Achsbock (5) bzw. der Anbauplatte (6) befestigt. Dies ist im gezeigten Ausführungsbeispiel der Außenring (24). Dieser stößt mit seiner Stirnseite stumpf an die Außenseite oder Stirnseite (44) der Anbauplatte (6) und ist hier durch die Befestigung (46), insbesondere eine ringförmige Schweißnaht, fixiert. Das Achsrohr (4) ist an der Innenseite (45) des Achsbocks (5) bzw. der Anbauplatte (6) befestigt (46).

Der Achsbock (5) weist in der zweiten Variante ein Stützmittel (41) auf, welches auf der Außenseite (44) des Achsbocks (5), insbesondere der Anbauplatte (6), angeordnet ist. Das Stützmittel (41) hat eine aufrechte, insbesondere in der normalen Betriebsstellung senkrechte, Ausrichtung und ist oberhalb des Ringlagers (23) angeordnet. Die Anordnung ist bevorzugt zentrisch zum Ringlager (23) und zur zentralen Drehachse (27).

Das Stützmittel (41) stützt das Drehlager (9) bzw. Ringlager (23) zusätzlich zur Befestigung (46) am Achsbock (5) ab. Das Stützmittel (41) kontaktiert mit einem unteren Stützmittelrand (43) das Ringlager (23), insbesondere dessen Außenring (24). An dieser Kontaktstelle kann eine Befestigung (46), insbesondere eine Schweißnaht, vorhanden sein.

Das Stützmittel (41) hat eine zur Lastaufnahme und Kraftableitung geeignete Formgebung. Im gezeigten Ausführungsbeispiel ist das Stützmittel (41) als Stützkonsole (42) ausgebildet. Diese hat eine nach außen ausbauchende Form. Sie kann z.B. als U-förmiges gerades Profil ausgebildet sein. Sie ist auf der Außenseite (44) in geeigneter Weise befestigt, z.B. durch Schweißnähte an den Kontaktstellen der Profilstege an der Anbauplatte (6).

Das Stützmittel (41), insbesondere die Stützkonsole (42), kann zwischen dem Drehlager (9) und einem oberen umgebogenen Rand (40) des Lagerbocks (5) bzw. der Anlageplatte (6) angeordnet sein. An der Kontaktstelle oder Stoßstelle zwischen dem Rand (40) und dem Stützteil (41) kann ebenfalls eine Befestigung (46), insbesondere Schweißnaht vorhanden sein.

Bei der zweiten Variante können die Sicken (30) des ersten Ausführungsbeispiels entfallen. Das Stützmittel (41) kann andererseits auch bei der ersten Variante der Federachse (1) mit geeigneter Anpassung eingesetzt werden.

Bei der Montage der Federachse (1) werden das Achsrohr (4) an der Innenseite (45) und der Außenring (24) an der Außenseite (44) der Anbauplatte (6) befestigt. Danach wird der Radschwinghebel (7) in das Achsrohr (4) eingesteckt, wobei auch das Drehlager (9) zusammengefügt wird durch Einsetzen des Lagerelements (25) und der inneren Lagerbuchse (26) in den Außenring (24). Die Gummifederung (8) kann vor oder beim Einstecken des Radschwinghebels (7) eingebracht werden. Falls sich beim Befestigen, insbesondere Anschweißen, des Außenrings (24) Verzüge ergeben haben sollten, kann der Außenring (24) am Innenumfang bedarfsweise bearbeitet, insbesondere ausgebohrt oder ausgedreht, werden, um etwaige Lageabweichung zu kompensieren.

In einer anderen und nicht dargestellten Ausführungsform kann ein elastisches Ausgleichsmittel an anderer Stelle des Drehlagers (9), z.B. zwischen dem Außenring (24) und der Schwingwelle (11), angeordnet werden. Die innere Lagerbuchse (26) kann z.B. über ein solches elastisches Ausgleichselement mit der Schwingwelle (11) verbunden werden. Bei der Montage des Radschwinghebels (7) und dem Zusammenfügen der Drehlagerteile kann dieses elastische Ausgleichselement etwaige Lageabweichungen kompensieren. Eine innenseitige Bearbeitung des Außenrings (24) kann entfallen.

Die Federachse (1) ist in den gezeigten Ausführungsformen als Längslenkerachse ausgebildet. Das Achsrohr (4) hat dabei eine gerade Erstreckung. Der Achsbock (5) kann rechtwinklig dazu ausgerichtet sein. Der Schwingarm (12) und die Schwingwelle (11) sind im Wesentlichen rechtwinklig zueinander ausgerichtet. In einer anderen und nicht dargestellten Ausführungsform kann die Federachse (1) als Schräglenkerachse ausgebildet sein. Das Achsrohr (4) hat dabei eine abgewinkelte Pfeilform, wobei der Radlenker (7) einen entsprechend angepassten Winkel zwischen der Schwingwelle (11) und dem Schwingarm (12) aufweist.

Abwandlungen der gezeigten und beschriebenen Ausführungsform sind in verschiedener Weise möglich.

Bei einer alternativen Ausbildung der Federung (8) als Drehstabfederung kann ein einzelner Drehstab oder Torsionsstab oder ein Paket von Drehstäben vorhanden sein. Der Einzelstab oder das Paket kann z.B. über einen Bund oder in anderer Weise mit der Schwingwelle (11) verbunden sowie innerhalb des Achsrohrs (4) an einer distanzierten Stelle drehfest abgestützt sein. Alternativ kann eine Abstützung im Achsrohr (4) entfallen, wobei der Einzelstab oder das Paket sich über die gesamte Achsrohrlänge erstrecken und jeweils beidendig mit einem Radschwinghebel bzw. mit einer Schwingwelle (11) verbunden sind. Die Schwingwelle (11) kann durch die Verbindung, z.B. eine Verschraubung, mit dem Einzelstab oder dem Paket in Axialrichtung im Achsrohr (4) fixiert werden. Bei einer zylindrischen Schwingwellenkontur kann die Lagerbuchse (26) kraftschlüssig, z.B. durch eine Klemmung oder eine Verklebung, mit der Schwingwelle (11) fest verbunden sein.

Die Federung (8) kann um weitere Teile ergänzt werden, z.B. um Schraubenfedern oder Druckluftfedern. Der Schwingarm (12) kann dabei eine entsprechend angepasste und abgeänderte Form aufweisen.

Ansonsten können die Merkmale der vorbeschriebenen Ausführungsbeispiele und der genannten Abwandlungen miteinander in anderer Weise kombiniert, insbesondere auch vertauscht werden.

### BEZUGSZEICHENLISTE

- 1: Federachse
- 2: Längsträger
- 3: Mittelsteg
- 4: Achsrohr
- 5: Achsbock
- 6: Anbauplatte
- 7: Radschwinghebel
- 8: Federung
- 9: Drehlager
- 9': Drehlagerteil für Befestigung
- 10: Ausgleichselement elastisch
- 11: Schwingwelle
- 12: Schwingarm
- 13: Radanschluss
- 14: Dämpferanschluss
- 15: Bund
- 16: Federaufnahme, Einschnürung
- 17: Federelement, Gummischnur
- 18: Lagerbock
- 19: Befestigungselement, Lagerflansch
- 20: Befestigungsmittel
- 21: Aufnahmering
- 22: Elastomerring
- 23: Ringlager
- 24: Außenring
- 25: Lagerelement, Gleitlagerring
- 26: Lagerbuchse
- 27: Drehachse
- 28: Durchgangsöffnung
- 29: Ausnehmung
- 30: Sicke
- 31: Fixiermittel
- 32: Befestigung, Schweißnaht
- 33: Straßenfahrzeug
- 34: Fahrzeugchassis
- 35: Zugkopf
- 36: Anbauchassis
- 37: Adapter
- 38: Fahrzeugrad
- 39: Stoßdämpfer
- 40: Rand
- 41: Stützmittel
- 42: Stützkonsole
- 43: Stützmittelrand
- 44: Außenseite
- 45: Innenseite
- 46: Befestigung, Schweißnaht

## Patentansprüche

1. Federachse für ein Straßenfahrzeug (33) mit einem Achsrohr (4), einem endseitigen, mit dem Achsrohr (4) fest verbundenen Achsbock (5) und mit einer im Achsrohr (4) integrierten Gummifederung (8), wobei am Achsrohr (4) ein mit der Gummifederung (8) verbundener Radschwinghebel (7) drehbar angeordnet ist, wobei der Achsbock (5) eine vom Achsrohr (4) axial wegweisende Außenseite (44) und eine zum Achsrohr (4) axial hinweisende Innenseite (45) hat, **dadurch gekennzeichnet, dass** der Radschwinghebel (7) ein aufgezogenes und am Achsbock (5) befestigtes Drehlager (9) aufweist.

2. Federachse nach Anspruch 1, **dadurch**
**gekennzeichnet, dass** das Drehlager (9) an der Außenseite (44) des Achsbocks (5) angeordnet und befestigt ist.

3. Federachse nach Anspruch 1 oder 2, **dadurch gekennzeichnet, dass** das Drehlager (9) ein zur Befestigung des Drehlagers (9) vorgesehenes Drehlagerteil (9') aufweist, das an der Außenseite (44) des Achsbocks (5) anliegt und befestigt ist.

4. Federachse nach Anspruch 1, 2 oder 3, **dadurch gekennzeichnet, dass** das Drehlager (9) an einem Stützelement (40), insbesondere einer aufrechten Stützkonsole (41), abgestützt und ggf. befestigt ist, welches an der Außenseite (44) des Achsbocks (5) oberhalb des Drehlagers (9) fest angeordnet ist.

5. Federachse nach einem der vorhergehenden Ansprüche, **dadurch gekennzeichnet, dass** das Achsrohr (4) an der Innenseite (45) des Achsbocks (5) befestigt ist.

6. Federachse nach einem der vorhergehenden Ansprüche, **dadurch gekennzeichnet, dass** das Drehlager (9) und das Achsrohr (4) getrennt voneinander am Achsbock (5) befestigt sind.

7. Federachse nach einem der vorhergehenden Ansprüche, **dadurch gekennzeichnet, dass** der Achsbock (5) eine quer zum Achsrohr (4) ausgerichtete Anbauplatte (6) aufweist, die zur außenseitigen Montage an einem aufrechten Mittelsteg (3) eines Längsträgers eines Fahrzeugchassis (34) ausgebildet ist, wobei das Drehlager (9) und das Achsrohr (4) an der Anbauplatte (6) befestigt sind.

8. Federachse nach einem der vorhergehenden Ansprüche, **dadurch gekennzeichnet, dass** der Radschwinghebel (7) eine in das Achsrohr (4) eingesteckte Schwingwelle (11) aufweist, auf der das Drehlager (9) angeordnet ist.

9. Federachse nach einem der vorhergehenden Ansprüche,, **dadurch gekennzeichnet, dass** das Drehlager (9) ein Ringlager (23), insbesondere ein Gleitlager, und ggf. ein auf dem Ringlager (23) angeordnetes elastisches Ausgleichselement (10) umfasst.

10. Federachse nach Anspruch 9, **dadurch gekennzeichnet, dass** das zur Befestigung des Drehlagers (9) vorgesehene Drehlagerteil (9') als ein Außenring (24) des Ringlagers (23) oder als ein Lagerbock (18) ausgebildet ist, welcher auf einem ringförmigen, auf dem Ringlager (23) befindlichen elastischen Ausgleichselement (10), insbesondere einem Elastomerring, angeordnet ist.

11. Federachse nach Anspruch 9 oder 10, **dadurch gekennzeichnet, dass** das Ringlager (23) eine mit dem Radschwinghebel (7) fest verbundene, ggf. innenseitig prismatisch konturierte Lagerbuchse (26), ein kreisringförmiges Lagerelement (25) und einen Außenring (24) aufweist.

12. Fahrzeugchassis für ein Straßenfahrzeug (33), insbesondere Fahrzeuganhänger oder leichtes motorisiertes Nutzfahrzeug, mit einer oder mehreren daran angeordneten Federachse(n) (1), **dadurch gekennzeichnet, dass** die Federachse (1) nach einem der Ansprüche 1 bis 11 ausgebildet ist.

13. Fahrzeugchassis nach Anspruch 12, **dadurch gekennzeichnet, dass** das Fahrzeugchassis (34) mehrere Längsträger (2) mit einem aufrechten Mittelsteg (3) aufweist, wobei die Federachse (1) mit einem Achsbock (5) an an dem Mittelsteg (3) bevorzugt plan anliegend befestigt ist.

14. Straßenfahrzeug, insbesondere Fahrzeuganhänger oder leichtes motorisiertes Nutzfahrzeug, mit einem Fahrzeugchassis (34) und einer oder mehreren daran angeordneten Federachse(n) (1), **dadurch gekennzeichnet, dass** das Fahrzeugchassis (34) nach Anspruch 12 oder 13 ausgebildet ist.

15. Verfahren zum Montieren einer Federachse (1) für ein Straßenfahrzeug (33), die ein Achsrohr (4), einen endseitigen und mit dem Achsrohr (4) fest verbundenen Achsbock (5) und eine im Achsrohr (4) integrierte Gummifederung (8) umfasst, wobei am Achsrohr (4) ein mit der Gummifederung (8) verbundener Radschwinghebel (7) drehbar angeordnet wird und wobei der Achsbock (5) eine vom Achsrohr (4) axial wegweisende Außenseite (44) und eine zum Achsrohr (4) axial hinweisende Innenseite (45) hat, **dadurch gekennzeichnet, dass** der Radschwinghebel (7) mit einem aufgezogenen Drehlager (8) in das Achsrohr (4) eingesteckt und anschließend das Drehlager (8) am Achsbock (5), insbesondere an dessen Außenseite (44), befestigt wird oder das Drehlager (8) zusammengefügt wird, wobei ein Drehlagerteil (9') zuvor am Achsbock (5), insbesondere an dessen Außenseite (44), befestigt wurde.

## Claims

1. Spring axle for a road vehicle (33) having an axle tube (4), an end-side axle block (5), which is connected fixedly to the axle tube (4), and having a rubber suspension (8) which is integrated in the axle tube (4), wherein an oscillating wheel lever (7) which is connected to the rubber suspension (8) is arranged rotatably on the axle tube (4), wherein the axle block (5) has an outer side (44) facing axially away from the axle tube (4) and an inner side (45) facing axially towards the axle tube (4), **characterized in that** the oscillating wheel lever (7) has a rotary bearing (9) which is pulled onto it and is fastened to the axle block (5).

2. Spring axle according to Claim 1, **characterized in that** the rotary bearing (9) is arranged on and fastened to the outer side (44) of the axle block (5) .

3. Spring axle according to Claim 1 or 2, **characterized in that** the rotary bearing (9) has a rotary bearing part (9') which is provided for fastening the rotary bearing (9) and which lies against and is fastened to the outer side (44) of the axle block (5).

4. Spring axle according to Claim 1, 2 or 3, **characterized in that** the rotary bearing (9) is supported on and optionally fastened to a supporting element (40), in particular an upright supporting bracket (41), said supporting element being arranged fixedly above the rotary bearing (9) on the outer side (44) of the axle block (5).

5. Spring axle according to one of the preceding claims, **characterized in that** the axle tube (4) is fastened to the inner side (45) of the axle block (5) .

6. Spring axle according to one of the preceding claims, **characterized in that** the rotary bearing (9) and the axle tube (4) are fastened separately from each other to the axle block (5).

7. Spring axle according to one of the preceding claims, **characterized in that** the axle block (5) has an add-on plate (6) which is oriented transversely with respect to the axle tube (4) and is designed for mounting on the outer side of an upright central web (3) of a longitudinal member of a vehicle chassis (34), wherein the rotary bearing (9) and the axle tube (4) are fastened to the add-on plate (6).

8. Spring axle according to one of the preceding claims, **characterized in that** the oscillating wheel lever (7) has an oscillating shaft (11) which is inserted into the axle tube (4) and on which the rotary bearing (9) is arranged.

9. Spring axle according to one of the preceding claims, **characterized in that** the rotary bearing (9) comprises an annular bearing (23), in particular a plain bearing, and optionally an elastic compensating element (10) which is arranged on the annular bearing (23).

10. Spring axle according to Claim 9, **characterized in that** the rotary bearing part (9') which is provided for fastening the rotary bearing (9) is designed as an outer ring (24) of the annular bearing (23) or as a bearing block (18) which is arranged on an annular, elastic compensating element (10), which is situated on the annular bearing (23), in particular an elastomer ring.

11. Spring axle according to Claim 9 or 10, **characterized in that** the annular bearing (23) has a bearing bushing (26), which is fixedly connected to the oscillating wheel lever (7) and is optionally contoured prismatically on the inner side, a bearing element (25) in the form of a circular ring, and an outer ring (24).

12. Vehicle chassis for a road vehicle (33), in particular vehicle trailer or light motorized utility vehicle, having one or more spring axles (1) arranged thereon, **characterized in that** the spring axle (1) is designed according to one of Claims 1 to 11.

13. Vehicle chassis according to Claim 12, **characterized in that** the vehicle chassis (34) has a plurality of longitudinal members (2) with an upright central web (3), wherein the spring axle (1) is fastened with an axle block (5) so as to lie, preferably flat, against the central web (3).

14. Road vehicle, in particular vehicle trailer or light motorized utility vehicle, having a vehicle chassis (34) and one or more spring axles (1) arranged thereon, **characterized in that** the vehicle chassis (34) is designed according to Claim 12 or 13.

15. Method for mounting a spring axle (1) for a road vehicle (33), the spring axle comprising an axle tube (4), an end-side axle block (5), which is connected fixedly to the axle tube (4), and comprising a rubber suspension (8) which is integrated in the axle tube (4), wherein an oscillating wheel lever (7) which is connected to the rubber suspension (8) is arranged rotatably on the axle tube (4), and wherein the axle block (5) has an outer side (44) facing axially away from the axle tube (4) and an inner side (45) facing axially towards the axle tube (4), **characterized in that** the oscillating wheel lever (7) is inserted with a rotary bearing (8) pulled onto it in the axle tube (4) and then the rotary bearing (8) is fastened to the axle block (5), in particular to the outer side (44) thereof, or the rotary bearing (8) is joined together, wherein a rotary bearing part (9') has been fastened previously to the axle block (5), in particular to the outer side (44) thereof.

## Revendications

1. Essieu à ressort pour un véhicule routier (33), comprenant un tube d'essieu (4), un support d'essieu (5) situé à l'extrémité, relié de manière fixe au tube d'essieu (4), et comprenant une suspension en caoutchouc (8) intégrée dans le tube d'essieu (4), un levier oscillant de roue (7) relié à la suspension en caoutchouc (8) étant agencé de manière rotative sur le tube d'essieu (4), le support d'essieu (5) ayant un côté extérieur (44) orienté axialement à l'opposé du tube d'essieu (4) et un côté intérieur (45) orienté axialement vers le tube d'essieu (4), **caractérisé en ce que** le levier oscillant de roue (7) présente un palier rotatif (9) monté et fixé sur le support d'essieu (5).

2. Essieu à ressort selon la revendication 1, **caractérisé en ce que** le palier rotatif (9) est agencé et fixé sur le côté extérieur (44) du support d'essieu (5) .

3. Essieu à ressort selon la revendication 1 ou 2, **caractérisé en ce que** le palier rotatif (9) présente une partie de palier rotatif (9') prévue pour la fixation du palier rotatif (9), qui repose et est fixée sur le côté extérieur (44) du support d'essieu (5).

4. Essieu à ressort selon la revendication 1, 2 ou 3, **caractérisé en ce que** le palier rotatif (9) est soutenu et éventuellement fixé sur un élément de soutien (40), notamment une console de soutien verticale (41), qui est agencé de manière fixe sur le côté extérieur (44) du support d'essieu (5) au-dessus du palier rotatif (9).

5. Essieu à ressort selon l'une quelconque des revendications précédentes, **caractérisé en ce que** le tube d'essieu (4) est fixé sur le côté intérieur (45) du support d'essieu (5).

6. Essieu à ressort selon l'une quelconque des revendications précédentes, **caractérisé en ce que** le palier rotatif (9) et le tube d'essieu (4) sont fixés séparément sur le support d'essieu (5).

7. Essieu à ressort selon l'une quelconque des revendications précédentes, **caractérisé en ce que** le support d'essieu (5) présente une plaque de montage (6) orientée transversalement au tube d'essieu (4), qui est configurée pour le montage côté extérieur sur une entretoise centrale verticale (3) d'un longeron d'un châssis de véhicule (34), le palier rotatif (9) et le tube d'essieu (4) étant fixés sur la plaque de montage (6) .

8. Essieu à ressort selon l'une quelconque des revendications précédentes, **caractérisé en ce que** le levier oscillant de roue (7) présente un arbre oscillant (11) inséré dans le tube d'essieu (4), sur lequel est agencé le palier rotatif (9).

9. Essieu à ressort selon l'une quelconque des revendications précédentes, **caractérisé en ce que** le palier rotatif (9) comprend un palier annulaire (23), notamment un palier lisse, et éventuellement un élément de compensation élastique (10) agencé sur le palier annulaire (23).

10. Essieu à ressort selon la revendication 9, **caractérisé en ce que** la partie de palier rotatif (9') prévue pour la fixation du palier rotatif (9) est configurée sous la forme d'une bague extérieure (24) du palier annulaire (23) ou sous la forme d'un support de palier (18), qui est agencé sur un élément de compensation élastique annulaire (10) se trouvant sur le palier annulaire (23), notamment une bague en élastomère.

11. Essieu à ressort selon la revendication 9 ou 10, **caractérisé en ce que** le palier annulaire (23) présente un coussinet (26) relié de manière fixe au levier oscillant de roue (7), éventuellement à contour prismatique côté intérieur, un élément de palier (25) en forme d'anneau de cercle et une bague extérieure (24).

12. Châssis de véhicule pour un véhicule routier (33), notamment une remorque de véhicule ou un véhicule utilitaire motorisé léger, comprenant un ou plusieurs essieu(x) à ressort (1) agencé(s) sur celui-ci, **caractérisé en ce que** l'essieu à ressort (1) est configuré selon l'une quelconque des revendications 1 à 11.

13. Châssis de véhicule selon la revendication 12, **caractérisé en ce que** le châssis de véhicule (34) présente plusieurs longerons (2) avec une entretoise centrale verticale (3), l'essieu à ressort (1) étant fixé avec un support d'essieu (5) de préférence à plat sur l'entretoise centrale (3).

14. Véhicule routier, notamment remorque de véhicule ou véhicule utilitaire motorisé léger, comprenant un châssis de véhicule (34) et un ou plusieurs essieu(x) à ressort (1) agencé (s) sur celui-ci, **caractérisé en ce que** le châssis de véhicule (34) est configuré selon la revendication 12 ou 13.

15. Procédé de montage d'un essieu à ressort (1) pour un véhicule routier (33), qui comprend un tube d'essieu (4), un support d'essieu (5) situé à l'extrémité et relié de manière fixe au tube d'essieu (4), et une suspension en caoutchouc (8) intégrée dans le tube d'essieu (4), un levier oscillant de roue (7) relié à la suspension en caoutchouc (8) étant agencé de manière rotative sur le tue d'essieu (4), et le support d'essieu (5) ayant un côté extérieur (44) orienté axialement à l'opposé du tube d'essieu (4) et un côté intérieur (45) orienté axialement vers le tube d'essieu (4), **caractérisé en ce que** le levier oscillant de roue (7) est inséré dans le tube d'essieu (4) avec un palier rotatif (8) monté, puis le palier rotatif (8) est fixé sur le support d'essieu (5), notamment sur son côté extérieur (44), ou le palier rotatif (8) est assemblé, une partie de palier rotatif (9') ayant été préalablement fixée sur le support d'essieu (5), notamment sur son côté extérieur (44).
